# EUROPÄISCHE PATENTANMELDUNG

(11) **EP 1 352 559 A2**
(43) Veröffentlichungstag der Anmeldung: **15.10.2003**
(21) Anmeldenummer: 03008455.2
(22) Anmeldetag: 11.04.2003
(51) Int. Cl.: A01J 7/02, A01J 5/007

(54) **Verfahren und Einrichtung zur Reinigung einer Melkanlage**

(30) Priorität: 12.04.2002 DE 10216236
(71) Anmelder: WestfaliaSurge GmbH, 59302 Oelde (DE)
(72) Erfinder: Osthues, Uwe, 58708 Menden (DE)
(74) Vertreter: Neumann, Ditmar

(57) **Zusammenfassung**

Zur verbesserten Durchführung eines Reinigungsvorgangs einer Melkanlage wird vorgeschlagen, dass eine verringerte Besuchsfrequenz (F) der Melkanlage durch melkbereite Tiere und ein zu der verringerten Besuchsfrequenz (BF) zugehöriger Zeitpunkt (t₀) prognostiziert wird und ein Reinigungsvorgang innerhalb einer den prognostizierten Zeitpunkt (t₀) verringerten Besuchsfrequenz umfassenden Zeitspanne (t´) ausgelöst wird.

## Beschreibung

Der Gegenstand der Erfindung bezieht sich auf ein Verfahren zur Durchführung eines Reinigungsvorgangs einer Melkanlage sowie eine Einrichtung zur Reinigung einer Melkanlage.

Melkanlagen, die Melkbecher, Milchbehälter sowie Milchleitungs- und Schleusensysteme enthalten, müssen zur Vermeidung von Verunreinigung im weitesten Sinne der in der Melkanlage geführten Milch gereinigt werden. Die Reinigung kann beispielsweise auch den Austausch der sich in der Melkanlage befindlichen Milchfilter beinhalten. Nur durch eine sichere und zuverlässige Reinigung der Melkanlage kann eine gewünschte Milchqualität gewährleistet werden.

Während eines Reinigungsvorgangs werden die Teile der Melkanlage durch unterschiedliche Flüssigkeiten gereinigt. Es ist bekannt, dass hierzu verschiedenartige Flüssigkeiten bereitgestellt werden. Bei diesen Flüssigkeiten kann es sich beispielsweise um Wasser handeln, welches zum Vor- und Nachspülen der Melkanlage dient. Des weiteren werden alkalisch wirkende Reinigungsflüssigkeiten sowie saure Flüssigkeiten verwendet. Durch die EP 0 603 150 B1 ist beispielsweise eine Reinigungsvorrichtung zum Reinigen einer Melkanlage bekannt.

Für eine erfolgreiche Reinigung der Melkanlage ist ein bestimmter Zeitaufwand notwendig. In konventionellen Melksystemen erfolgt eine Spülung nach Bedarf, meist nach Beendigung des Melkens oder nach einer gewissen Zeitspanne. Bei diesen konventionellen Melksystemen werden die zu melkenden Tiere dem Melkvorgang in vorgegebenen Zeitabständen zugeführt.

Im Gegensatz zu derartigen konventionellen Melksystemen wird bei (freiwilligen) automatischen Melksystemen einem Tier die Möglichkeit gegeben, nahezu zu jeder Zeit zum Melkstand zu gelangen. Der Reinigungsvorgang bei solchen automatischen Melksystemen wird von Hand aktiviert. Es besteht auch die Möglichkeit, den Reinigungsvorgang zu vorgegebenen Zeitpunkten, die an den Arbeitsrhythmus des bedienenden Personals angepasst sind, zu aktivieren.

Die manuelle oder die voreingestellte Aktivierung des Reinigungsvorgangs hat den Nachteil, dass der Reinigungsvorgang auch in einer Phase oder auch genau dann durchgeführt wird, wenn auch die Tiere das Melksystem aufsuchen möchten. Dadurch, dass die Tiere dann abgewiesen werden, besteht die Möglichkeit, dass die Motivation der Tiere, das Melksystem aufzusuchen, abnimmt. Eine hohe Motivation ist förderlich, um die Tiere oft genug zu melken, abgreifen zu können und/oder in einen anderen Stallbereich gehen zu lassen, um dort beispielsweise auch anderen Bedürfnissen wie Fressen oder Saufen nachzugehen.

Eine Zwangspause des Systems kann eine Vergrämung der Tiere bewirken. Dies kann zu einer Minderung der Kapazität des automatischen Melksystems führen, denn nicht alle Tiere warten im Regelfall, um bei wieder anlaufendem System mit gleicher Konsequenz das Melksystem aufzusuchen.

Außerdem können, insbesondere bei einer längeren Zwischenmelkzeit, Teile der sich im Euter befindenden Milch wieder resorbiert werden, so dass zu einem späteren Melkzeitpunkt nicht mehr die ursprüngliche Milchmenge gemolken werden kann.

Hiervon ausgehend liegt der vorliegenden Erfindung die Zielsetzung zugrunde, ein Verfahren sowie eine Reinigungseinrichtung anzugeben, durch die die Gefahr der Vergrämung der Tiere vermindert wird. Ein weiteres Ziel ist es, die Auslastung der Melkanlage zu erhöhen.

Erfindungsgemäß wird diese Zielsetzung durch ein Verfahren mit den Merkmalen des Anspruchs 1, eine Reinigungseinrichtung mit den Merkmalen des Anspruchs 14, eine Vorrichtung mit den Merkmalen 17 sowie durch eine Melkanlage mit den Merkmalen des Anspruchs 20 gelöst. Vorteilhafte Weiterbildungen und Gestaltungen sind Gegenstand der jeweils abhängigen Patentansprüche.

Nach der Erfindung wird ein Verfahren zur Durchführung eines Reinigungsvorgangs einer Melkanlage vorgeschlagen, bei dem eine verringerte Besuchsfrequenz (der zu melkenden Tiere) sowie der zu der verringerten Besuchfrequenz zugehörige Zeitpunkt bestimmt und ein (z.B. erster) Reinigungsvorgang innerhalb einer den Zeitpunkt umfassenden Zeitspanne ausgelöst wird. Diese Zeitspanne bis zum Start kann sehr klein sein. Vorzugsweise wird der Reinigungsvorgang genau zu dem Zeitpunkt ausgelöst, zu dem die (voraussichtlich) verringerte Besuchsfrequenz ermittelt worden ist.

Dadurch, dass der Reinigungsvorgang (in der Regel) zu besuchsschwachen Zeiten des automatischen Melksystems erfolgt, wird die Auslastung des Melksystems erhöht. Mit anderen Worten, durch das erfindungsgemäße Verfahren werden geringere Kapazitätsverluste, die ohnehin durch eine Zwangssystempause entstehen, vermieden oder wenigstens verringert. Da die automatische Melkanlage zu den Zeiten hoher bzw. prognostiziert hoher Besuchsfrequenz zur Verfügung steht, wird auch die Gefahr einer Vergrämung einer Mehrzahl von Tieren vermindert.

Unter "Zeitpunkt bestimmen" wird hier ein Ableiten des Zeitpunktes verstanden. Das Bestimmen oder Ableiten kann z.B. durch eine Prognose, also Schätzung der erwarteten Besuchsfrequenz erfolgen. Es muss aber nicht geschätzt werden, sondem es kann auch ein Zeitpunkt abgeleitet werden, der sich aus dem realen momentanen Zustand ergibt. Das kann z.B. der Fall sein, wenn feststeht, dass in der nächsten Zeitspanne im wesentlichen kein Tier gemolken werden wird, weil alle Tiere z.B. derart weit entfernt auf der Weide stehen, so dass sie im Normalfall innerhalb der Reinigungspause nicht an der Melkanlage erscheinen werden, weil sie z.B. schon für die Zurücklegung des Weges eine entsprechende Zeitspanne benötigen.

Wenn erfindungsgemäß ein Zeitpunkt für eine Reinigung festgelegt wird, so wird die Reinigung in aller Regel auch zu dem prognostizierten Zeitpunkt durchgeführt, selbst wenn dann noch melkbereite und melkberechtigte Tiere vor der Melkanlage stehen.

Nach einer vorteilhaften Weiterbildung des Verfahrens wird vorgeschlagen, dass der Verlauf der Besuchsfrequenz der Melkanlage ermittelt und gespeichert wird, wobei während der Ermittlung der Besuchsfrequenz im wesentlichen kein Reinigungsvorgang durchgeführt wird. Durch diese Maßnahme wird eine mögliche Beeinträchtigung des Tierverhaltens durch Zwangssystempausen ausgeschlossen. Der so bestimmte Verlauf der Besuchsfrequeriz der zu melkenden Tiere der Melkanlage kann quasi idealtypisch für die Tiere sein, die die automatische Melkanlage besuchen beziehungsweise aufsuchen wollen. Das kann insbesondere dann zu vernünftigen Ergebnissen führen, wenn keine Störungen von außen oder innen auftreten. Andernfalls muss man einen längeren Zeitraum beobachten oder aber einen geeigneten Zeitraum auswählen.

Besteht keine oder nur eine eingeschränkte Möglichkeit die Besuchsfrequenz ohne Reinigungsvorgänge aufzunehmen, so wird vorgeschlagen, dass eine Voreinstellung vorgegeben oder ein manueller Eingriff, d.h. der Nutzer aktiviert den Reinigungsvorgang selbst, ermöglicht. Die in dieser Phase ermittelte Besuchsfrequenz dient nach einem einstellbaren Zeitraum zur Heranziehung und Prognose für die bevorzugten Spülzeitpunkte.

Unter der Annahme, dass der ermittelte Verlauf der Besuchsfrequenz der Melkanlage innerhalb eines bestimmten Toleranzfeldes auch über größere Zeiträume zutreffend ist, wird vorgeschlagen, dass wenigstens ein Minimum des Verlaufs der Besuchsfrequenz sowie der zugehörige Zeitpunkt bestimmt werden und ein erster Reinigungsvorgang innerhalb einer den Zeitpunkt umfassenden Zeitspanne durchgeführt wird. Die Zeitspanne ist vorzugsweise so gewählt, dass der Reinigungsvorgang als solcher abgeschlossen ist, wenn eine signifikante Steigerung der Besuchsfrequenz am Ende des Reinigungsvorgangs vorliegen würde.

Vorzugsweise wird die Historie der Besuchsfrequenz ausgewertet. Dabei ist es bevorzugt, dass die herangezogenen Daten der Historie zur Auswertung auf einen bestimmten Zeitraum begrenzt werden. Vorzugsweise ist dieser Zeitraum variabel. Dabei kann die jeweilige Anzahl an Daten bzw. das Alter der zu berücksichtigenden Daten variabel sein. Es ist auch möglich, dass in festgelegten Abständen oder bei jeder Berechnung bzw. Ableitung eines Spülzeitpunktes die Datenbasis konsolidiert wird. So kann z.B. jeden Tag oder jede Woche die Datenbasis aktualisiert werden, indem jeweils zur Bestimmung des nächsten Spülzeitpunktes nur die Daten der letzten 30 Tage berücksichtigt werden. Es ist auch möglich, dass 60 oder mehr Tage oder nur die letzten 10 Tage oder weniger berücksichtigt werden. Die Wahl des Zeitraums kann auch von äußeren Einflüssen abhängen (Krankheitsstatus, Veränderungen der Futterroutine, sind neue Tiere zur Herde dazu gekommen? etc.).

Gemäß einer weiteren vorteilhaften Ausgestaltung der zuvor beschriebenen Ausgestaltungen des Verfahrens wird vorgeschlagen, dass sämtliche Minima der zugehörigen Zeitpunkte bestimmt werden. Dies eröffnet die Möglichkeit zu unterschiedlichen Zeitpunkten einzelne Reinigungsvorgänge durchzuführen, wobei es nicht unbedingt zwingend ist, dass die Reinigungsvorgänge mit gleicher Intensität durchgeführt werden. Es können zu unterschiedlichen Zeitpunkten auch unterschiedliche Arten der Reinigung durchgeführt werden. Beispielsweise kann eine Zwischenspülung mit reinem Wasser erfolgen.

Bevorzugt ist ein Verfahren, bei dem das absolute Minimum und der zugehörige Zeitpunkt bestimmt, berechnet, geschätzt oder abgeleitet wird und dann ein erster Reinigungsvorgang innerhalb einer den Zeitpunkt des absoluten Minimums umfassenden Zeitspanne ausgelöst wird.

Es wird vorgeschlagen, dass der aktuelle Verlauf der Besuchsfrequenz mit dem ermittelten und gespeicherten Verlauf der Besuchsfrequenz verglichen und eine verringerte Besuchsfrequenz sowie der zugehörige Zeitpunkt prognostiziert wird. Dieser Vorschlag für die Bestimmung des auslösenden Zeitpunktes eines Reinigungsvorgangs hat auch den Vorteil, dass bei Kenntnis einer Vielzahl von gespeicherten Verläufen der Besuchsfrequenz von Herden unterschiedlicher Zusammensetzung, eine sichere Prognose über eine verringerte Besucherfrequenz sowie den dazugehörigen Zeitpunkt bei einer aktuellen Herde erreicht wird.

Das Verhalten der Tiere im einzelnen und auch in der Herde insgesamt und somit insbesondere auch der Besuchsrhythmus kann sich im Laufe der Zeit verändern. Es wird daher vorgeschlagen, dass der Verlauf der Besuchsfrequenz über der Zeit gespeichert wird. Zur Ableitung eines geeigneten Reinigungszeitpunktes kann es deshalb vorgesehen sein, nur einen bestimmten Zeitraum aus der Vergangenheit zu berücksichtigen. Dieser Berücksichtigungszeitraum kann vorgegeben aber auch automatisch oder manuell veränderbar sein. Er kann beispielsweise die letzten 3, 7, 15, 30 oder auch 60 Tage umfassen. Dann werden zur Ableitung eines geeigneten Reinigungszeitpunktes die Melkbesuche oder andere Zählerdaten der Tiere nur in diesem Zeitraum berücksichtigt.

Um langsame Änderungen der Melk- oder Besuchsfrequenz zu berücksichtigen, kann es vorteilhaft sein, die Gewichtung länger zurückliegender Zeitpunkte zu verringern, während die letzten Stunden oder Tage verstärkt berücksichtigt werden. Die Gewichtung kann z.B. linear oder exponentiell sein.

Wird bei der Ableitung eines geeigneten Reinigungszeitpunktes eine abrupte Verhaltensänderung der Herde festgestellt, kann auch nur der Zeitraum nach der Verhaltensänderung berücksichtigt werden. Das könnte z.B. bei beginnendem Weidegang oder auch bei Beginn der Wintersaison der Fall sein. In solchen Fällen kann auch ein Hinweis oder ein Alarmsignal ausgegeben werden, um den Landwirt über die Änderung zu informieren.

In einer bevorzugten Weiterbildung wird der Biorythmus der Tiere berücksichtigt.

Zur Erhöhung der Wahrscheinlichkeit, zu der eine verringerte Besuchsfrequenz zu erwarten sein wird, wird vorgeschlagen, dass der Verlauf der Besuchsfrequenz der Melkanlage innerhalb eines vorgegebenen Zeitabstandes erneut ermittelt und gespeichert wird. Hierbei können auch jahreszeitliche oder sonstige Einflüsse auf die Besuchsfrequenz berücksichtigt werden.

Um eine hohe Milchqualität zu erreichen, wird des weiteren vorgeschlagen, dass auf einen bzw. den ersten Reinigungsvorgang folgend wenigstens ein weiterer Reinigungsvorgang durchgeführt wird. Bevorzugt ist eine Durchführung des weiteren Reinigungsvorgangs zu einem Zeitpunkt, zu dem eine verringerte Besuchsfrequenz vorliegt.

Um jedoch zwei Reinigungsvorgänge nicht innerhalb einer kurzen Zeitspanne aufeinanderfolgend durchzuführen, wird gemäß einer noch weiteren vorteilhaften Ausgestaltung des Verfahrens vorgeschlagen, dass ein Mindestzeitabstand zwischen zwei aufeinanderfolgenden Reinigungsvorgängen vorgegeben wird.

Gemäß einer weiteren vorteilhaften Weiterbildung des Verfahrens wird vorgeschlagen, dass ein maximaler Zeitabstand zwischen zwei aufeinanderfolgenden Reinigungsvorgängen vorgegeben wird. Sind maximaler und minimaler Zeitabstand zwischen zwei aufeinanderfolgenden Reinigungs-vorgängen vorgegeben, so wird vorzugsweise in dieser Zeitspanne zwischen dem minimalen und dem maximalen Zeitabstand der Zeitpunkt ermittelt, zu dem die geringste Besuchsfrequenz vorliegt, bzw. an dem mit großer Wahrscheinlichkeit ein geeigneter Zeitpunkt zur Reinigung vorliegt.

Gemäß einem weiteren erfinderischen Gedanken wird eine Reinigungseinrichtung für eine Melkanlage vorgeschlagen, die sich dadurch auszeichnet, dass Mittel zur Ermittlung einer verringerten Besuchsfrequenz sowie des zur verringerten Besuchsfrequenz zugehörigen Zeitpunktes und zur Auslösung eines ersten Reinigungsvorgangs innerhalb einer den Zeitpunkt umfassenden Zeitspanne vorgesehen sind.

Vorzugsweise weist die Reinigungseinrichtung wenigstens eine Speichereinheit zur Speicherung der zur Besuchsfrequenz der Anlage zugehörigen Daten auf.

Gemäß einer noch weiteren vorteilhaften Weiterbildung der Reinigungseinrichtung wird vorgeschlagen, dass eine Datenverarbeitungseinheit vorgesehen ist, durch die ein aktueller Verlauf der Besuchsfrequenz mit wenigstens einem vorgegebenen Verlauf der Besuchsfrequenz verglichen und eine verringerte Besuchsfrequenz sowie der zugehörige Zeitpunkt prognostiziert wird. Bei der Datenverarbeitungseinheit kann es sich beispielsweise um einen Computer handeln.

Des weiteren wird eine Vorrichtung umfassend eine Reinigungseinrichtung nach Anspruch 14, 15 oder 16 vorgeschlagen, die eine Erkennungseinrichtung zur Tieridentifikation aufweist. Unter einer Tieridentifikation wird die Erkennung bzw. Identifikation eines individuellen Tieres verstanden. Die Tieridentifikation kann auch lediglich die Feststellung umfassen, dass ein Tier das Melksystem aufsuchte. Hierdurch kann die Besuchsfrequenz ermittelt werden. Es kann sowohl die Anzahl der Melkungen in einem definierten Zeitraum, Zahl der Besuche insgesamt, welche neben den erfolgten Melkungen auch die abgewiesenen Besuche enthält oder eine andere Zählweise genutzt werden.

Gemäß einer vorteilhaften Ausgestaltung der Vorrichtung wird vorgeschlagen, dass die Erkennungseinrichtung optische Mittel aufweist. Hierbei handelt es sich beispielsweise um eine Überwachungskamera, z.B. um Nahbereichsphotogrammetrie oder andere Systeme, welche Aussagen über die Position und damit auch die Anzahl der Tiere die sich in einem definierten Bereich befinden erfassen und diese zur Bestimmung der Besuchsfrequenz nutzen.

Die Erkennungseinrichtung kann auch wenigstens eine Empfangseinheit und mindestens eine Sendeeinheit umfassen. Vorzugsweise ist die Empfangseinheit stationiert und ein jedes Tier mit einer Sendeeinheit versehen.

Insbesondere wird eine Melkanlage umfassend eine Reinigungseinrichtung nach Anspruch 14, 15 oder 16 vorgeschlagen. Bevorzugt wird eine Melkanlage umfassend eine Vorrichtung nach Anspruch 17, 18 oder 19.

Vorzugsweise werden unterschiedliche Reinigungsvorgänge vorgesehen, nämlich z.B. einen oder mehrere Hauptreinigungsvorgänge und einen oder mehrere Nebenreinigungsvorgänge. Vorzugsweise sind die Nebenreinigungsvorgänge weniger intensiv als die Hauptreinigungsvorgänge. Ein Hauptreinigungsvorgang kann länger durchgeführt werden, indem z.B. häufiger und/oder länger gespült wird. Der Hauptreinigungsvorgang kann auch mit einer anderen oder intensiveren Reinigungsflüssigkeit erfolgen. Auch die Verfahrensführung kann bei einem Hauptreinigungsvorgang angepasst sein, indem einzelne Spülvorgänge z.B. bei höheren Temperaturen durchgeführt werden.

Vorzugsweise wird ein Hauptspülgang nachts durchgeführt, da in der Nacht die Ruhepausen des Systems länger sind . Es hat sich herausgestellt, dass die "Täler" mit geringerer Besuchfrequenz tagsüber kürzer sind als in der Nacht. Deshalb kann es bevorzugt sein, tagsüber kürzere Reinigungsvorgänge oder Nebenreinigungsvorgänge durchzuführen, die nur eine geringe Zeitspanne benötigen. In der Nacht kann dann eine oder es können mehrere Hauptreinigungsvorgänge durchgeführt werden, bei denen in entsprechend langen "Tälern" (Zeiten verminderter Besuchsfrequenz) eine entsprechend intensive Reinigung erfolgen kann.

Beispielsweise kann bei einem Reinigungsvorgang in der Nacht ein Desinfektionsmittel und ein Reinigungsmittel eingesetzt werden, während tagsüber in kurzen prognostizierten Reinigungspausen nur eine Spülung mit heißem oder kochendem Reinigungsmittel (z.B. reines Wasser) erfolgt.

Vorzugsweise wird die Intensität der Reinigung in Abhängigkeit von dem zeitlichen Abstand zur letzten Melkung bzw. von dem zeitlichen Abstand mehrerer vorhergehender Melkungen festgelegt.

Bei der Häufigkeit und Intensität der Reinigungsvorgänge kann auch die Außentemperatur außerhalb und die Innentemperatur im Stall bzw. an der Melkanlage berücksichtigt werden. Dabei gilt der Grundsatz, dass bei höheren Außentemperaturen im Sommer mehr Keime auftreten als bei niedrigen Außentemperaturen im Winter. Deshalb wird vorzugsweise im Sommer häufiger gespült oder intensiver gespült als im Winter. Möglich ist auch, dass wenigstens ein Teil der Spülvorgänge im Winter kürzer durchgeführt als im Sommer. Möglich ist auch, dass im Sommer häufiger kurze Zwischenspülungen mit kaltem oder auch warmem Wasser erfolgen, die im Winter ganz unterbleiben.

Wenn ein geeigneter Keimsensor vorgesehen ist, kann dessen Messergebnis auch zur Bestimmung der Reinigungshäufigkeit herangezogen werden. Ein solche Einrichtung zur Keimbestimmung kann z.B. in der Anlage vorgesehen sein. Es ist aber auch möglich, dass ein solches Messergebnis von z.B. einer Molkerei, dem Milchtankwagen oder einem geeigneten Dienstleister, der die Keimzahl bestimmt, geliefert wird. Die Übertragung der Messergebnisse in das System kann online per Internet, per SMS oder über sonst eine bekannte Art der drahtgebundenen oder drahtlosen Datenverbindung erfolgen. Mit den Messergebnissen kann der Reinigungsmodus (Intensität, Art, Länge der Reinigung, verwendete Mittel) und die Häufigkeit der Reinigungsvorgänge festgelegt werden.

Ein solche Einstellung des Reinigungsmodus und/oder der Reinigungshäufigkeit erfolgt in einer bevorzugten Weiterbildung aller zuvor beschriebenen Weiterbildungen und Ausgestaltungen automatisch. Das kann zu einer variablen Reinigungshäufigkeit führen, bei der generell nur einmal oder zweimal pro Tag gereinigt wird. Bei Bedarf wird häufiger gereinigt, z.B. drei- oder viermal.

Daraus folgt, dass es möglich ist, bei steigender Keimbelastung der Herdenmilch oder auch der Milch einzelner Gruppen oder Tiere die Reinigungshäufigkeit, -art und -intensität automatisch einzustellen wird. Der Landwirt oder eine sonstige Bedienperson muss in dieser Ausgestaltung nicht eingreifen, sondern wird grundsätzlich nur über die getroffenen Maßnahmen informiert. Die Einstellung der Spülhäufigkeit kann auch in Abhängigkeit von der generellen Auslastung der Anlage erfolgen.

Bevorzugt ist es auch, dass eine Einleitung eines Reinigungsvorganges bzw. Spülabschnittes schon derart rechtzeitig erfolgt, dass keine weitere Vorbereitungszeit benötigt wird, wenn der Reinigungsvorgang startet. Das ist beispielsweise der Fall, wenn der Reinigungsvorgang zum aktuellen Zeitpunkt starten soll, aber noch ein Tier in dem Melkroboter steht und gemolken wird. Dann liegt der Zeitpunkt des Reinigungsbeginns insofern fest, als nach Melkende der Vorgang startet. Über eine Abschätzung der Restmelkdauer kann der Reinigungsvorgang dann zeitnah vorbereitet werden, so dass nach dem Startsignal die Reinigung ohne weitere Verzögerung beginnt, weil schon vorher eine entsprechende Menge an Wasser oder Reinigungsflüssigkeit vorgewärmt wurde oder die benötigte Reinigungsflüssigkeit gemischt wurde.

Eine Verbesserung der Prognose der besuchsarmen Zeitpunkte bzw. Zeiträume kann durch eine Auswertung von Sensorsignalen erzielt werden. Dazu eignen sich aktuelle Signale oder auch die gespeicherten Signale eines vergangenen Zeitraums. Beispielsweise können die Signale der Selektionstore verwendet werden, um die Vorhersage zu verbessern. Mit der Berücksichtigung der Selektionstorsignale kann die Prognose verbessert werden, da mit den Selektionstorsignalen Informationen über den derzeitigen Aufenthaltsort und eine eventuelle Bewegungsrichtung einzelner oder vieler Tiere gewonnen werden können, die bei der Festlegung des Reinigungszeitpunktes berücksichtigt werden.

Umfasst eine Stallanlage z.B. einen Liegbereich, einen Melkbereich und einen Fressbereich, so können diese Bereiche derart angeordnet sein, dass die Tiere von dem Liegebereich in den Fressbereich nur gelangen können, wenn sie zuvor den Melkbereich passieren, während sie dann anschließend von dem Fressbereich direkt in den Liegebereich gelangen können. Eine derartige Steuerung kann über Einwegtore erfolgen.

Dabei kann zwischen Liege- und Melkbereich eine Tierzähleinrichtung Z_{LM}, zwischen Melk- und Fressbereich eine Tierzähleinrichtung Z_{MF} und zwischen Fressund Liegebereich eine Tierzähleinrichtung Z_{FL} vorgesehen sein.

Eine Registrierung kann auch über die Steuerungen der Einwegtore und/oder die Erfassung von Selektionstorsignalen oder auch anderen Zählvorrichtungen, die einen Bereichswechsel erfassen, erfolgen. Über derartige Maßnahmen kann die Vorhersage verbessert werden.

Insbesondere die Anordnung einer Tierzähleinrichtung Z_{FL} zwischen Fress- und Liegebereich und deren Auswertung ist vorteilhaft, da mit diesen Signalen eine besonders zuverlässige Prognose möglich ist. Wenn z.B. gerade die meisten Tiere gefressen haben und sich von dem Fress- in den Liegebereich begeben haben, dann ist davon auszugehen, dass diese Tiere sich für die nächsten 1 oder 2 bis etwa 5 Stunden hinlegen.

Eine große Anzahl von Signalen in einer kurzen Periode kündigt deshalb einen Zeitraum an, der voraussichtlich gut für die Durchführung einer Reinigung geeignet ist. Wenn ein Reinigungsvorgang nun in Kürze durchgeführt werden soll, so eignet sich dieser Zeitraum gut dafür.

Die Anmelderin behält sich vor, einen separaten Schutz auf ein Verfahren und eine Vorrichtung auszurichten, wobei die Auswahl oder die Festlegung eines Reinigungszeitpunktes in Abhängigkeit der Signale einer Tierzähleinrichtung zwischen Fress- und Liegebereich erfolgt.

Weiterhin können weitere Signale berücksichtigt werden, die in der Stallanlage oder der Melkanlage bestimmt werden. Es kann auch die Besuchshistorie oder der Verlauf der Besuchsfrequenz der melkbereiten Tiere berücksichtigt werden.

Wenn z.B. ein Vorwarteraum vorgesehen ist, in den die melkwilligen Tiere vor dem Melken geleitet werden, so ist es bevorzugt, dass die Anzahl der sich im Vorwarteraum befindenden Tiere bei der Auswahl eines geeigneten Zeitpunktes zum Spülen berücksichtigt wird. Das kann über die Signale an einer Tierselektionseinrichtung am Zutritt des Warteraums erfolgen.

Es ist aber auch eine Tiererkennungseinrichtung im Vorwarteraum möglich, die die Anzahl der wartenden Tiere bestimmt. Dazu können übliche Transponder, Responder oder Rescounter-Systeme verwendet werden oder es werden auch kamerabasierende Systeme eingesetzt, bei denen eine Bildauswertung erfolgt. Auch eine Bestimmung einer (räumlichen) Temperaturverteilung ist dazu möglich, wobei eine anschließende Auswertung die Anzahl der Tiere liefern kann. Möglich ist auch der Einsatz eines GPS-Systems oder eine Pseudo-GPS-Systems mit lokalen Pseudosatelliten zur Ortsbestimmung der Tiere.

Bei Berücksichtigung der Tieranzahl in einem Vorwarteraum kann auch die Melkberechtigung berücksichtigt werden. Wenn nur noch melkwillige aber keine melkberechtigten Tiere in dem Vorwarteraum sind, kann der Reinigungsvorgang gestartet werden.

Wenn nur noch wenige (melkberechtigte) Tiere im Vorwarteraum warten, kann der Reinigungsvorgang vorbereitet werden (Aufheizen der Reinigungs- und/oder Spülflüssigkeit etc.). Wenn mehrere Melkplätze vorhanden sind, kann auch bei einem ersten oder bei einem Teil der Melkplätze die Reinigung oder Vorreinigung schon gestartet werden, während auf anderen Plätzen noch gemolken wird.

In einer weiteren Ausgestaltung einer oder mehrerer der zuvor beschriebenen Ausgestaltungen werden externe Einflüsse bei der Festlegung der Reinigungszeitpunkte berücksichtigt. Dazu zählt z.B. die Verwendung günstigeren Nachtstroms. Es kann beispielsweise auch erst dann gespült werden, wenn genügend Energie oder eine geeignete Wärmequelle zur Verfügung steht.

Weitere Vorteile und Einzelheiten des Verfahrens und der Reinigungseinrichtung werden anhand der in der Zeichnung dargestellten bevorzugten Ausführungsbeispiele erläutert, ohne dass der Gegenstand der Erfindung auf diese Ausführungsbeispiele beschränkt wird. Es zeigen:
- Fig. 1: schematisch in einem Diagramm den Verlauf der Besuchsfrequenz über der Zeit,
- Fig. 2: schematisch ein Diagramm der Besuchsfrequenz mit zwei Reinigungsvorgängen pro 24 Stunden,
- Fig. 3: schematisch ein zweites Besuchsfrequenz-Diagramm,
- Fig. 4: schematisch ein Besuchsfrequenz-Diagramm mit drei Reinigungsvorgängen pro 24 Stunden und
- Fig. 5: schematisch eine Reinigungsvorrichtung für eine Melkanlage.

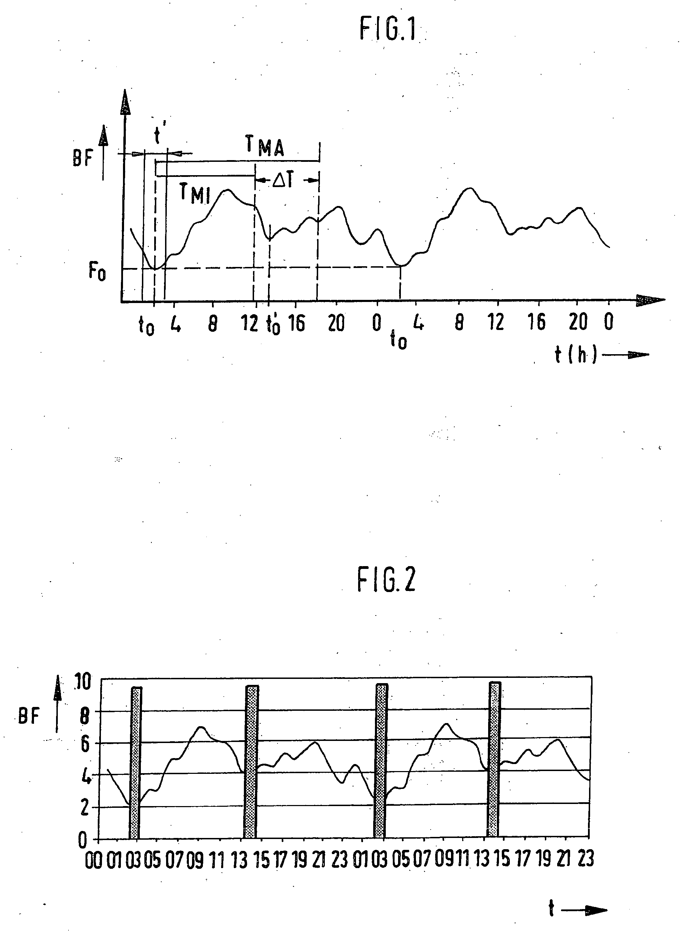

In der Figur 1 ist schematisch der Verlauf einer Besuchsfrequenz BF über der Zeit dargestellt. Aus dem Verlauf der Besuchsfrequenz BF ist ersichtlich, dass sich diese an diesen zwei Tagen relativ gleichmäßig wiederholt. Der Verlauf der Besuchsfrequenz ist derart ermittelt worden, dass während der Ermittlung im wesentlichen keine Reinigungsvorgänge durchgeführt worden sind, so dass die Tiere, bei denen es sich um Kühe handelt, ungestört von etwaigen Reinigungsvorgängen die Melkanlage aufsuchen konnten.

Aus dem Verlauf der Besuchsfrequenz wird eine verringerte Besuchsfrequenz F sowie der zur verringerten Besuchsfrequenz F zugehörige Zeitpunkt t₀ bestimmt oder prognostiziert. Im Anschluss daran würde ein erster Reinigungsvorgang innerhalb einer diesen Zeitpunkt t₀ umfassenden Zeitspanne t' durchgeführt.

Sollen innerhalb von 24 Stunden z.B. zwei Spülvorgänge durchgeführt werden, so erfolgt der zweite Spülvorgang nach dem ersten Spülvorgang. Ist eine Mindestzeit T_{MI} und eine Maximalzeit T_{MA} seit dem ersten Spülvorgang eingestellt, so findet der zweite Spülvorgang innerhalb des Zeitintervalls ΔT statt, welches durch die minimale Zeitspanne bzw. Mindestzeit T_{MI} und durch die maximale Zeitspanne Maximalzeit T_{MA} begrenzt wird.

Für die Bestimmung des zweiten Reinigungsvorgangs wird der Verlauf der Besuchsfrequenz innerhalb des Zeitintervalls ΔT betrachtet und die verringerte Besuchsfrequenz sowie der dazugehörige Zeitpunkt innerhalb des Zeitintervalls ΔT ermittelt, indem der Zeitpunkt prognostiziert wird. Nach dem in der Figur 1 dargestellten Verlauf der Besuchsfrequenz liegt der (z.B. prognostizierte) Zeitpunkt einer minimalen Besuchsfrequenz in dem Zeitintervall ΔT bei ca. 13.30 Uhr. Ein Reinigungsvorgang würde innerhalb eines Zeitintervalls zwischen 13.00 und 14.00 h Uhr durchgeführt werden.

Da der Verlauf der Besuchsfrequenz relativ gleichmäßig an den zwei Tagen ist, wird angenommen, dass der Verlauf der Besuchsfrequenz in 24 Stunden im wesentlichen dem Verlauf der Besuchsfrequenz für alle Tage oder wenigstens dem folgenden Tag entspricht.

In der Figur 2 ist der schematische Verlauf der Besuchsfrequenz sowie die Zeitspannen, in denen innerhalb von 24 Stunden zwei Reinigungsvorgänge durchgeführt werden, dargestellt. Aus der Figur 2 ist ersichtlich, dass entsprechend der Auswertung der Besuchsfrequenz und den Vorgaben hinsichtlich eines Mindestund Maximalabstands zwischen zwei Reinigungsvorgängen der erste Reinigungsvorgang in dem Zeitintervall zwischen 2.00 und 3.00 Uhr und der zweite Reinigungsvorgang voraussichtlich in dem Zeitintervall zwischen 13.00 und 14.00 Uhr stattfindet.

Dabei hängt der Zeitpunkt des zweiten Reinigungsvorgangs vorzugsweise auch von dem Zeitpunkt des ersten Reinigungsvorgangs ab. Wenn der erste Reinigungsvorgang (aus welchen Gründen auch immer) früher oder später stattfinden sollte, dann wird das Zeitintervall für den zweiten Reinigungsvorgang entsprechend angepasst.

Bei mehreren Reinigungsvorgängen pro Tag, d.h. innerhalb von 24 Stunden wird der Mindest- und der Maximalabstand zwischen den Reinigungsvorgängen entsprechend angepasst. Der (mittlere) Abstand zwischen einzelnen Spülvorgängen kann variabel sein und z.B. von der Tageszeit und anderen äußeren (z.B. Wetter, Sonne, Regen, Hitze, Kälte) und inneren (z.B. Krankheitsstand) Bedingungen abhängen.

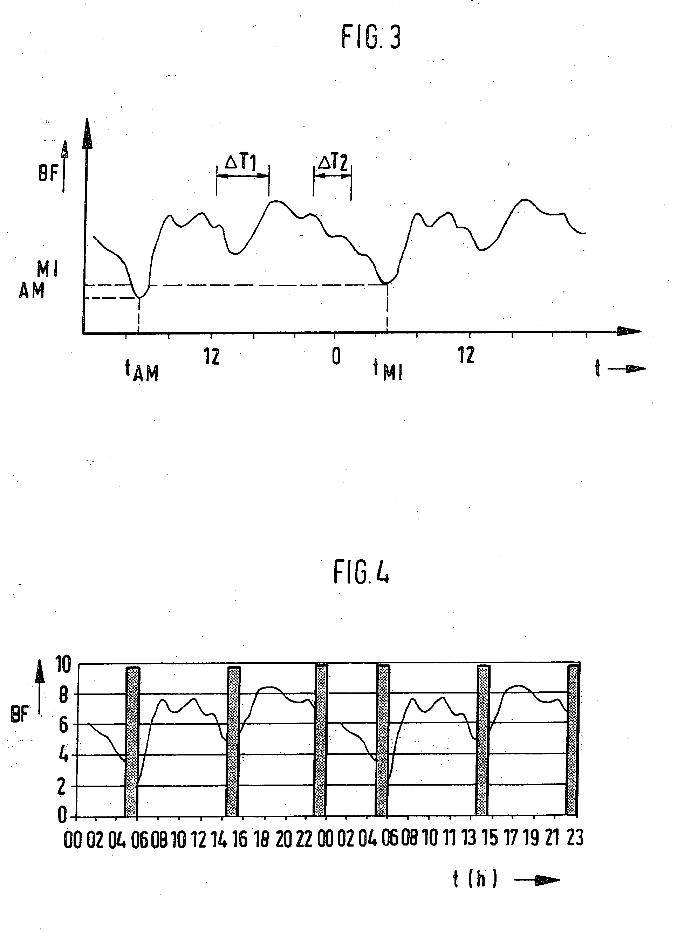

Figur 3 zeigt den Verlauf der Besuchsfrequenz über einen Zeitraum von 48 Stunden. Aus diesem Verlauf ist ersichtlich, dass dieser periodisch ist. Aus der Ermittlung einer verringerten Besuchsfrequenz, bei der es sich nach Figur 3 um das absolute Minimum handelt, wird der entsprechende Zeitpunkt erfasst. Durch Vorgabe der Mindest- und Maximalabstände werden innerhalb der entsprechenden Zeitintervalle ΔT₁ und ΔT₂ die Zeitpunkte ermittelt, zu denen eine verringerte Besuchsfrequenz vorliegt. Der zweite beziehungsweise der dritte Reinigungsvorgang wird innerhalb einer den Zeitpunkt der verringerten Besuchsfrequenz umfassenden Zeitspanne ausgelöst.

Figur 4 zeigt die entsprechenden Zeitspannen, innerhalb derer die Reinigungsvorgänge durchgeführt werden.

Die Besuchsfrequenz kann für die gesamte Herde ermittelt werden. Dann besteht auch die Möglichkeit, die Besuchsfrequenz einzelner Tiere zu ermitteln und daraus die Besuchsfrequenz der Herde, zu denen die Tiere gehören, zu bestimmen.

Ist die Besuchsfrequenz einer Herde ermittelt worden, so besteht die Möglichkeit, dass durch eine Veränderung der Zusammensetzung der Herde auch eine Veränderung der Besuchsfrequenz eintritt. Die Besuchsfrequenz kann sich auch in Abhängigkeit von der Laktationsphase einzelner Tiere verändern. Es wird daher vorgeschlagen, dass der aktuelle Verlauf der Besuchsfrequenz mit dem ermittelten und gespeicherten Verlauf der Besuchsfrequenz verglichen und eine verringerte Besuchsfrequenz sowie der zugehörige Zeitpunkt prognostiziert wird. Eine Prognose einer verringerten Besuchsfrequenz sowie eines dazugehörigen Zeitpunktes kann aufgrund bekannter aktueller Größen dem daraus ermittelten Verlauf und/oder statistischer Größen prognostiziert werden.

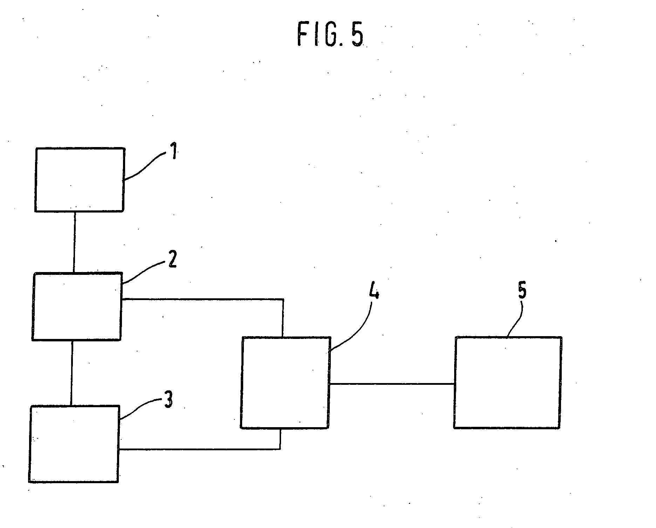

Figur 5 zeigt schematisch eine Reinigungseinrichtung für eine Melkanlage. Die Reinigungseinrichtung weist eine Reinigungseinheit 5 auf. Mit dem Bezugszeichen 1 wird eine Erkennungseinrichtung zur Tieridentifikation bezeichnet. Bei dieser Erkennungseinrichtung 1 kann es sich um eine solche handeln, die mit'optischen Mitteln ausgestattet ist.

Zur Feststellung der Besuchsfrequenz kann die Erkennungseinrichtung auch so ausgebildet sein, dass die Anzahl erfolgter Melkungen in einem definierten Zeitraum, die Anzahl der Besuche insgesamt, welche neben den erfolgten Melkungen auch die abgewiesenen Besuche enthält oder ein anderer Zähler (z.B. Vorselektion) genutzt werden.

Bei einem System mit einer Erfassung der Anzahl der Tiere, die eine Melkanlage aufgesucht haben, gleich ob diese am direkten Eingang der Melkanlage sind oder in einem vorgelagerten Bereich einer Einrichtung zur Zählung vorhanden ist, können nach Belieben die Zähler genutzt werden.

Es besteht auch die Möglichkeit, die Anzahl der Tiere, welche die Melkanlage aufsuchen mit Hilfe einer Überwachungskamera (z.B. Nahbereichsphotogrammetrie) oder andere Systeme, die Aussagen über die Position und damit auch die Anzahl der Tiere, die sich in einem definierten Bereich befinden, zu erfassen.

Es besteht auch die Möglichkeit, dass die Erkennungseinrichtung wenigstens eine Empfangseinheit und mindestens eine Sendeeinheit aufweist. Die Reinigungseinrichtung weist des weiteren die zur Ermittlung einer verringerten Besuchsfrequenz sowie des zur verringerten Besuchsfrequenz zugehörigen Zeitpunkts fest und zur Auslösung eines ersten Reinigungsvorgang innerhalb einer den Zeitpunkt umfassenden Zeitspanne.

Die Einrichtung kann des weiteren eine Speichereinheit 3 aufweisen, die zur Speicherung der zu der Besuchsfrequenz der Melkanlage zugehörigen Daten vorgesehen ist. Die Speichereinheit kann einen gespeicherten Verlauf der Besuchsfrequenz enthalten. Mittels einer Verarbeitungseinheit 4 kann der aktuelle Verlauf der Besuchsfrequenz mit wenigstens einem vorhandenen Verlauf der Besuchsfrequenz verglichen und eine verringerte Besuchsfrequenz sowie der zugehörige Zeitpunkt prognostiziert werden. Das Ergebnis liefert ein Signal, durch den ein Reinigungsvorgang zum gegebenen Zeitpunkt durchgeführt wird.

## Patentansprüche

1. Verfahren zur Durchführung eines Reinigungsvorgangs einer Melkanlage, bei dem eine verringerte Besuchsfrequenz (F) von zu melkenden Tieren sowie der zur verringerten Besuchsfrequenz (BF) von zu melkenden Tieren zugehörige Zeitpunkt (t₀) abgeleitet und ein Reinigungsvorgang innerhalb einer den Zeitpunkt (t₀) umfassenden Zeitspanne (t') ausgelöst wird.

2. Verfahren nach Anspruch 1, bei dem der Verlauf der Besuchsfrequenz (BF) des Melksystems ermittelt und gespeichert wird.

3. Verfahren nach Anspruch 1 oder 2, bei dem während der Ermittlung der Besuchsfrequenz im wesentlichen kein Reinigungsvorgang durchgeführt wird.

4. Verfahren nach mindestens einem der vorhergehenden Ansprüche, bei dem wenigstens ein Minimum (MI) sowie der zugehörige Zeitpunkt (t_{MI}) bestimmt werden und ein Reinigungsvorgang innerhalb einer den Zeitpunkt (t_{MI}) umfassenden Zeitspanne (t') durchgeführt wird.

5. Verfahren nach mindestens einem der vorhergehenden Ansprüche, bei dem eine Mehrzahl von Minima (MI) und die zugehörigen Zeitpunkte (t_{MI}) bestimmt werden.

6. Verfahren nach mindestens einem der vorhergehenden Ansprüche, bei dem das absolute Minimum (AM) und der zugehörige Zeitpunkt (t_{AM}) bestimmt wird.

7. Verfahren nach mindestens einem der vorhergehenden Ansprüche, bei dem ein Reinigungsvorgang innerhalb einer den Zeitpunkt (t_{AM}) umfassenden Zeitspanne (t') ausgelöst wird.

8. Verfahren nach mindestens einem der vorhergehenden Ansprüche, bei dem der aktuelle Verlauf der Besuchsfrequenz (BF) mit dem ermittelten und gespeicherten Verlauf der Besuchsfrequenz verglichen und eine verringerte Besuchsfrequenz (F) sowie der zugehörige Zeitpunkt (tₒ) prognostiziert wird.

9. Verfahren nach mindestens einem der vorhergehenden Ansprüche, bei dem der Verlauf der Besuchsfrequenz (BF) des Melksystems während der Periode innerhalb eines vorgegebenen Zeitabstandes erneut ermittelt und gespeichert wird.

10. Verfahren nach mindestens einem der vorhergehenden Ansprüche, bei dem wenigstens ein weiterer Reinigungsvorgang durchgeführt wird.

11. Verfahren nach Anspruch 10, bei dem der wenigstens eine weitere Reinigungsvorgang auch zu einem Zeitpunkt einer verringerten Besuchsfrequenz stattfindet.

12. Verfahren nach mindestens einem der vorhergehenden Ansprüche, bei dem ein Mindestzeitabstand (T_{MI}) zwischen zwei aufeinanderfolgenden Reinigungsvorgängen vorgegeben ist.

13. Verfahren nach mindestens einem der vorhergehenden Ansprüche, bei dem ein maximaler Zeitabstand (T_{MA}) zwischen zwei aufeinanderfolgenden Reinigungsvorgängen vorgegeben ist.

14. Reinigungseinrichtung für eine Melkanlage, **dadurch gekennzeichnet, dass** Mittel (2) zur Ermittlung einer verringerten Besuchsfrequenz (F) sowie des zur verringerten Besuchsfrequenz (F) zugehörigen Zeitpunktes (t₀) und zur Auslösung eines Reinigungsvorgangs innerhalb einer den Zeitpunkt (t₀) umfassenden Zeitspanne (t') vorgesehen sind.

15. Reinigungseinrichtung nach Anspruch 14, **dadurch gekennzeichnet, dass** wenigstens eine Speichereinheit (3) zur Speicherung der zur Besuchsfrequenz (F) des Melksystems zugehörigen Daten vorgesehen ist.

16. Reinigungseinrichtung nach Anspruch 14 oder 15, **dadurch gekennzeichnet, dass** eine Datenverarbeitungseinheit (4) vorgesehen ist, durch die ein aktueller Verlauf der Besuchsfrequenz (F) mit wenigstens einem vorbekannten Verlauf der Besuchsfrequenz verglichen und eine verringerte Besuchsfrequenz sowie der zugehörige Zeitpunkt prognostiziert wird.

17. Vorrichtung umfassend eine Reinigungseinrichtung nach Anspruch 14, 15 oder 16 sowie eine Erkennungseinrichtung (1) zur Tieridentifikation.

18. Vorrichtung nach Anspruch 17, **dadurch gekennzeichnet, dass** die Erkennungseinrichtung optische Mittel aufweist und/oder die Erkennungseinrichtung wenigstens eine Empfangseinheit und mindestens eine Sendeeinheit umfasst.

19. Melkanlage umfassend eine Reinigungseinrichtung nach Anspruch 14, 15 oder 16 oder eine Vorrichtung nach Anspruch 17 oder 18.
